# EUROPEAN PATENT APPLICATION

(11) **EP 2 146 160 A1**
(43) Date of publication of application: **20.01.2010**
(21) Application number: 08160357.3
(22) Date of filing: 14.07.2008
(51) Int. Cl.: F24J 2/04, F24J 2/52, H01L 31/042

(54) **Sloped roof provided with a solar panel holder with extendible supporting rails**

(71) Applicant: Ubbink B.V., 6984 AA Doesburg (NL)
(72) Inventor: Boogaard, Maurits Alexander, 5403 PA Uden (NL); Lavrard Meyer, Michel Georges Florian, 44100 Nantes (FR)
(74) Representative: De Hoop, Eric

(57) **Abstract**

The invention relates to a sloped roof provided with a solar panel holder that supports at least one solar panel, wherein the solar panel holder comprises a plate cover deck with sloping water gutter channels and multiple parallel extending elongated coupling assemblies mounted on the plate cover deck, wherein the coupling assemblies comprise a first and a subsequent second elongated supporting rail with a mounting clamp, which are aligned with each other and which support and clamp opposite circumferential edges of the solar panel, and a slide-out coupling between the first and the second supporting rail, wherein the slide-out coupling is adapted for coupling the first and second elongated supporting rail spaced apart from each other.

## Description

### BACKGROUND

De invention relates to a sloped roof provided with a solar panel holder that supports at least one solar panel. By a solar panel is meant a photovoltaic (PV) panel for electricity, or a solar collector for heating water.

A known solar panel holder comprises a plate cover deck with sloping water gutter channels mounted on the roof boarding and multiple parallel extending supporting rods mounted on the plate cover deck for supporting the solar panels. The supporting rods are provided in one standardized length. Before the construction of the solar panel holder on site, the supplier saws the supporting rods to the length that is actually needed for a specific solar panel holder. This length depends on the amount and the size of the solar panels to be installed. The cut off end sections of the standardized supporting rods are disposed of. Subsequently a carpenter or electrician mounts the cover deck on the roof boarding.

An object of the invention is to provide a solar panel holder which can be used for various sizes of solar panels.

An object of the invention is to provide solar panel holder which can be installed without using sawing tools.

An object of the invention is to provide solar panel holder which can be installed without previous production planning by the supplier.

### SUMMARY OF THE INVENTION

The invention provides, according to one aspect, a sloped roof provided with a solar panel holder that supports at least one solar panel, wherein the solar panel holder comprises a plate cover deck with sloping water gutter channels and multiple parallel extending elongated coupling assemblies mounted on the plate cover deck, wherein the coupling assemblies comprise a first and a subsequent second elongated supporting rail with a mounting clamp, which supporting rails are aligned with each other and which support and clamp opposite circumferential edges of the solar panel, and a slide coupling or slide-out coupling between the first and the second supporting rail, wherein the slide-out coupling couples the first and second elongated supporting rail fully spaced apart from each other while bridging the distance between the first and second supporting rail.

The slide-out coupling enables a proper configuration of the coupling assemblies with respect to the solar panel and the plate cover deck, allowing the same coupling assemblies to be used for various sizes of solar panels. Configuration or fine adjustment can be done on site by extending the first and second supporting rail away from each other.

In one embodiment thereof the slide-out coupling couples the first and second elongated supporting rail spaced apart at a mutual distance of at least 1/10 of the length of one of said supporting rails, preferably 1/4 of the length of one of said supporting rails, preferably 1/3 of the length of one of said supporting rails, preferably equal the length of one of said supporting rails or longer, while remaining the mutual alignment of the supporting rails. The embodiments allow adjustment of the distance between the first and second supporting rail over a major distance with respect to their length, while still forming an aligned unit to be mounted on the plate cover deck.

In an easily configurable embodiment the slide-out coupling enables a continuously variable adjustment of the mutual distance of the first and second supporting rail prior to the mounting of the coupling assembly on the plate cover deck.

In one embodiment the slide-out coupling comprises a first locking device for locking the mutual position of the first and second supporting rail. The locking can be done after adjustment of the mutual position of the first and second supporting rail, whereby they can together form one single supporting unit.

Preferably, the first locking device locally deforms the first or second supporting rail to lock the telescopic coupling. The deformation can be elastically or plastically, for example by locally squeezing a part of the slide-out coupling.

The coupling assembly can form a rotation stiff unity when the slide-out coupling substantially locks counter rotation of the first and second supporting rail around the longitudinal axis of the coupling assembly.

The supporting rails can be kept aligned with each other at various mutual distances of the end surfaces when the slide-out coupling comprises an elongated coupling member that is slidably supported by at least one of the supporting rails.

In a preferred embodiment thereof the elongated coupling member is telescopically confined inside at least one of the supporting rails. The coupling assemblies can than be assembled rather fast on the roof by putting the end of the coupling member into the supporting rail.

In one embodiment the supporting rails comprise an elongated prismatic profile, preferably made of metal, preferably aluminum, that is at least partially hollow to confine a part of the coupling member. In another embodiment the coupling member comprise an elongated prismatic profile, preferably made of metal, preferably aluminum. The prismatic shape allows manufacturing of the profiles by means of extrusion.

The slide-out coupling can be easily assembled by placing the parts into each other when the cross section of said profile is substantially equal over the entire length of the profile.

The elongated coupling assemblies can each as a unit couple two solar panels in a row when the elongated coupling assemblies comprise a third elongated supporting rail with a clamp that is aligned with the second elongated supporting rail, and said slide-out coupling between the second and the third coupling rail, wherein the second supporting rail clamps and supports the adjacent circumferential edges of two solar panels.

In one embodiment the coupling assemblies comprise an anchor on at least one of said supporting rails for mounting that supporting rail on the cover plate deck.

In one embodiment the mounting clamps are slidably supported by the supporting rails for adjustment of the position of the clamps along the supporting rail. The mounting clamps preferably comprise second locking means for locking the mounting clamps with respect to the supporting rail. In this manner the solar panel can be placed on the coupling assemblies and be brought into the correct position, where after the mounting clamps are slid against the circumferential edges to secure the solar panel.

The invention provides, according to a second aspect, a coupling assembly for clamping and supporting a solar panel on a solar panel holder, comprising a first and a subsequent second elongated supporting rail with a mounting clamp, which supporting rails are aligned with each other and which support and clamp opposite circumferential edges of the solar panel, and a slide-out coupling between the first and the second supporting rail, wherein the slide-out coupling couples the first and second elongated supporting rail fully spaced apart from each other while bridging the distance between the first and second supporting rail.

The invention provides, according to a third aspect, a method for providing a sloped roof with a solar panel holder that supports at least one row, preferably at least two rows with each at least one solar panel, wherein the solar panel holder comprises a plate cover deck with sloping water gutter channels and multiple parallel extending elongated coupling assemblies mounted on the plate cover deck, wherein the coupling assemblies comprise a first and a subsequent second elongated supporting rail with a mounting clamp, which supporting rails are aligned with each other and which support and clamp opposite circumferential edges of the solar panel, and a slide-out coupling between the first and the second supporting rail, and, in case of at least two rows, a third elongated supporting rail with a mounting clamp that is aligned with the first and second elongated supporting rail, and a slide-out coupling between the second and the third supporting rail, wherein the third coupling rail supports the adjacent circumferential edges of two solar panels out of the two rows, wherein the method comprises supplying the coupling assemblies to the roof in distinct packages, wherein a package comprises an end set of parts including the first and second supporting rail and the slide-out coupling, or wherein a package comprises a centre set of parts including the third elongated supporting rail and at least one piece of the slide-out coupling, wherein the supplied number of end sets is equal to or a multiple of the number of free circumferential edges extending perpendicular to the elongated coupling assemblies and the number of centre sets is equal to or a multiple of the number of groups adjacent circumferential edges extending perpendicular to the elongated coupling assemblies.

When the solar panel holder is built according to the invented method, it is sufficient to draft the configuration or layout of the panels, which means determining of the number of rows and columns of solar panels, which may be interrupted, and assembling the coupling assemblies from the prescribed end sets and centre sets of parts after unpacking the packages. For a supplier it can be sufficient just to have the end sets and centre sets on stock. The production planning is rather independent of the individual configurations of the solar panel holders to be built. Redundancy of parts at the place of construction can be minimized.

The invention provides, according to a fourth aspect, a package comprising an end set and/or a centre set for providing a coupling assembly for supporting at least one solar panel on a sloped roof,
wherein the end set comprises a first and a subsequent second elongated supporting rail, and a slide-out coupling between the first and the second supporting rail, and
wherein the centre set comprises a third elongated supporting rail and a further slide-out coupling,
wherein, at least in use, the second or third elongated supporting rail and the first elongated supporting rail are fully spaced apart from each other and are coupled to each other by the slide-out coupling which bridges the distance between the coupled supporting rails.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows the relevant portion of a slanted roof on which a solar panel holder with multiple solar panels according to the invention has been installed;
Figure 2 shows the roof according to figure 1, with some solar panels taken away to show some elongated coupling assemblies supporting the solar panels;
Figure 3 shows two telescopically coupled supporting rails and the anchors of the coupling assemblies shown in figure 2;
Figure 4 shows an exploded view of the supporting rails and the anchors of figure 3.
Figures 5A and 5B show cross sections of the coupled supporting rails according to lines V A,B - V A,B in figure 3, with the telescopic coupling in unlocked and locked condition, respectively;
Figure 6A shows a cross section of the supporting rails and the anchor along lines VI A - VI A in figure 3;
Figure 6B shows the cross section of an alternative supporting rail, as taken along line VI B - VI B of figure 3; and
Figures 7A-D show design options for multiple embodiments of the solar panel holder according to the invention.

### DETAILED DESCRIPTION OF THE INVENTION

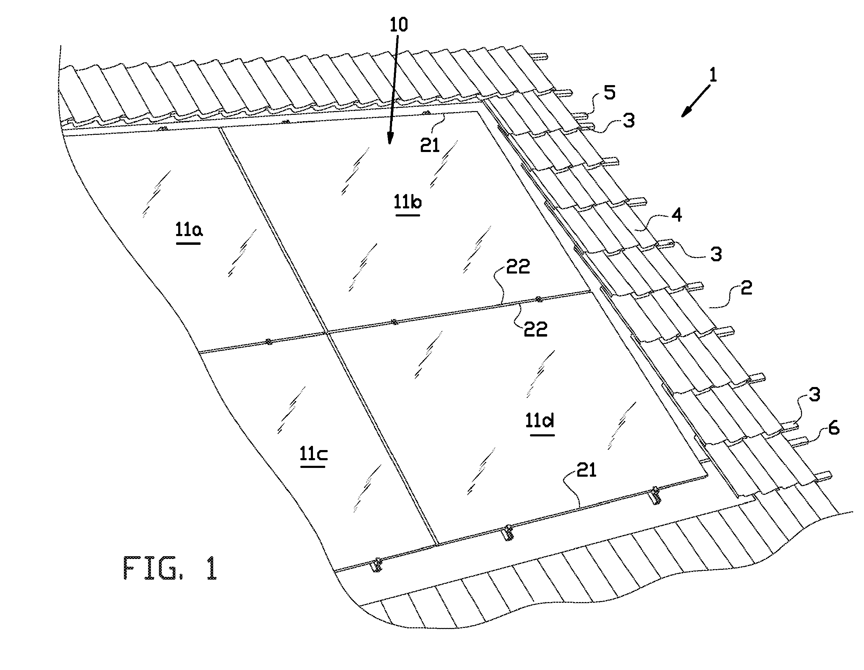

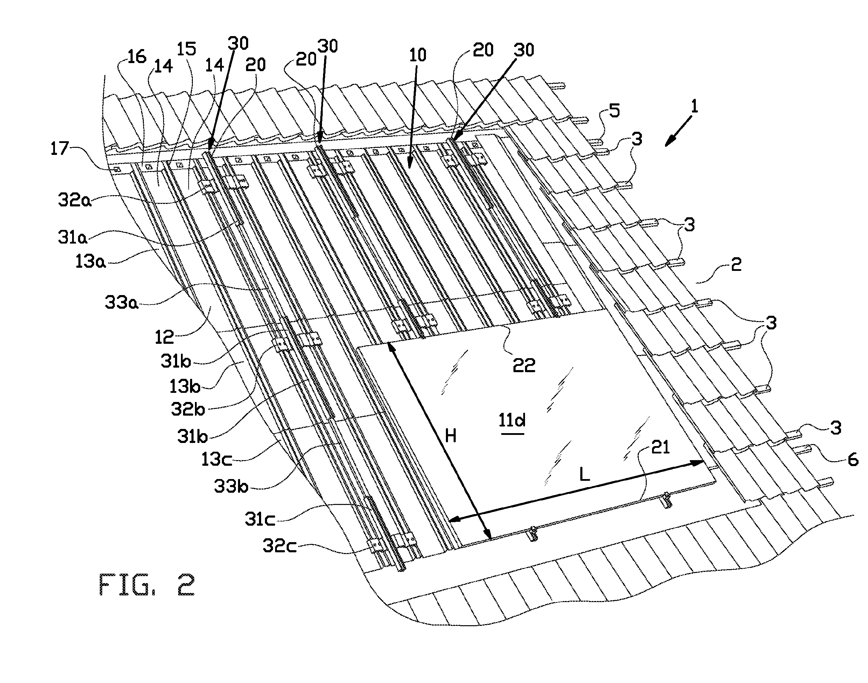

Figures 1 and 2 show a slanted roof 1 comprising a slanted roof boarding 2 that is provided with horizontally extending tile battens 3 where tiles 4 have been hooked on in a manner known per se. As best shown in figure 2 the tiles 4 have been arranged around a rectangular solar panel holder 10 according to an embodiment of the invention. The solar panel holder 10 is mounted on the battens 3 and carries two rows of solar panels 11a, 11b, 11c, 11d attached thereon as shown in figure 1. In a further not shown embodiment the solar panel holder covers the whole roof boarding 2, whereby the slanted roof has no tiles.

As shown in figure 2, the solar panel holder 10 comprises a plate cover deck 12 which in this embodiment is built up with three elongated cover plates 13a-c. The cover plates 13a-c have an identical shape and size, and extend parallel to each other in horizontal direction, partially overlapping in the sloping direction similar to the tiles 4. The cover plates 13a-c are each formed out of a homogenous plastic sheet with a uniform thickness, such as a sheet of polyethylene, by means of vacuum formation, whereby the cover plates 13a-c are watertight over their entire surface.

The cover plates 13a-c have a repetitive shape in their horizontally extending, longitudinal direction, and alternately comprise elongated gutter sections 14 that continue into upwardly extending elongated mounting ribs 15 separating the gutter sections 14. The gutter sections 14 are substantially flat or slightly concave in downward direction perpendicularly to the main plane of the cover plates 13a-c, wherein the mounting ribs 15 provide the necessary bending stiffness to the cover plates 13a-c over substantially the whole length of the gutter sections 14 for proper handling of the cover plates 13a-c. The elongated gutter sections 14 and the elongated mounting ribs 15 extend perpendicular to the longitudinal direction of the cover plates 13a-c and are formed such that the overlapping sections of the cover plates 13a-c partially nest in order to guide rain water downwards along the overlapping cover plates 13a-c.

The cover plates 13a-c each have a flat upper edge strip 16 extending along the entire length of each of the cover plates 13a-c. In figure 2 only the upper edge strip 16 of the uppermost cover plate 13a is shown, as the other upper edge strips are overlapped. Into the upper edge strips 16 hollow hook notches 17 have been formed that extend downward in order to hook behind a horizontal tile batten 3 or, like the uppermost cover plate 13a, behind an additional batten 5 that has been mounted on the roof boarding 2 in order to obtain the correct height of the plate cover deck 12.

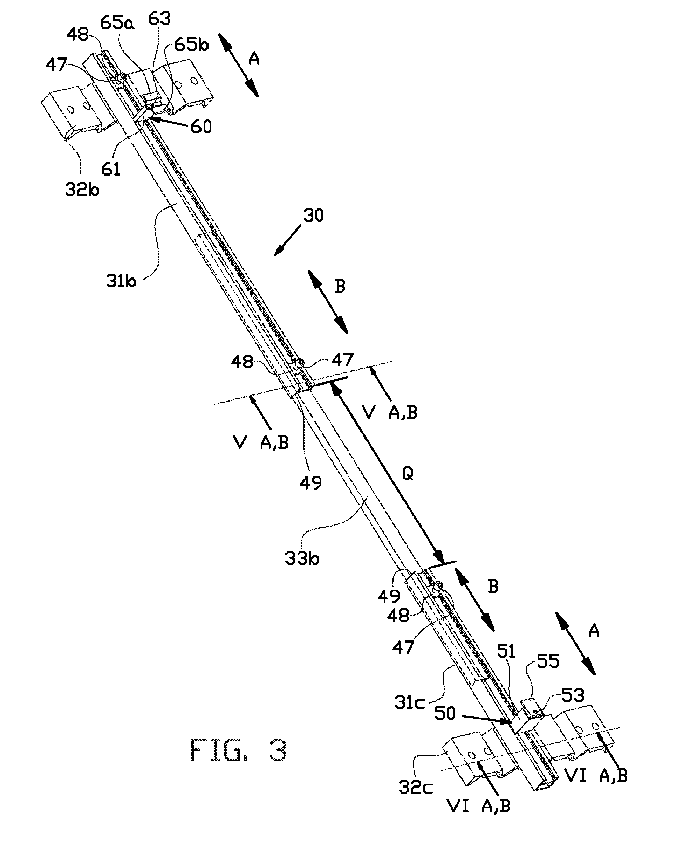

The solar panel holder 10 comprises multiple elongated coupling assemblies 30 on the plate cover deck 12. Some parts of one coupling assembly 30 are shown in figure 3. The coupling assemblies 30 are positioned such that each of the solar panels 11a-d is supported by two adjacent, parallelly extending coupling assemblies 30. In the described embodiment the solar panel holder 10 carries two horizontal rows of solar panels 11a-d. The coupling assemblies 30 are positioned on 1/4 and 3/4 of the length L of the solar panels 11a-d for stably supporting the solar panels 11a-d. In the described embodiment, the solar panels 11a-d have a landscape orientation. Alternatively, the solar panels have a portrait orientation, wherein the elongated coupling assemblies extend horizontally in order to clamp the longest solar panel edge 21 in the same manner.

The coupling assemblies 30 comprise straight, elongated aluminium supporting rails 31a-c that are telescopically coupled by means of identical, aluminium coupling profiles 33a,b. The supporting rails 31a-c and the coupling profiles 33a,b have the same shape in their cross section, which shape is constant cross over their entire length. The coupling profiles 33a,b are partially confined in the supporting rails 31a-c and thereby a slide-out coupling or telescopic coupling is formed. The coupling profiles 33a,b bridge the distance between the supporting rails 31a-c. The opposing end surfaces 49 of the supporting rails 31a-c that face each other are thus kept fully spaced apart from each other by the slide-out coupling.

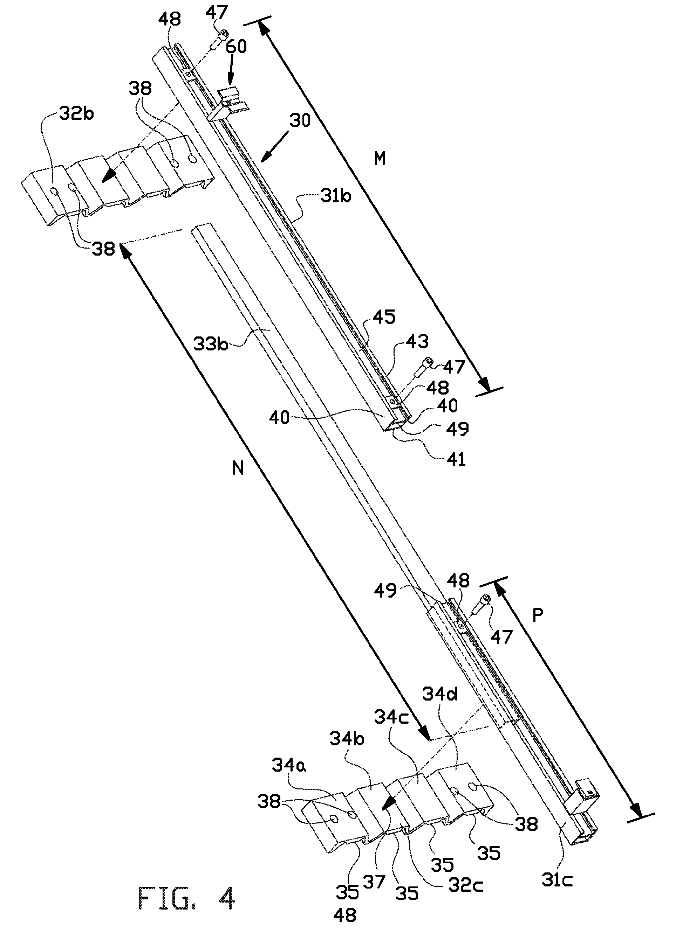

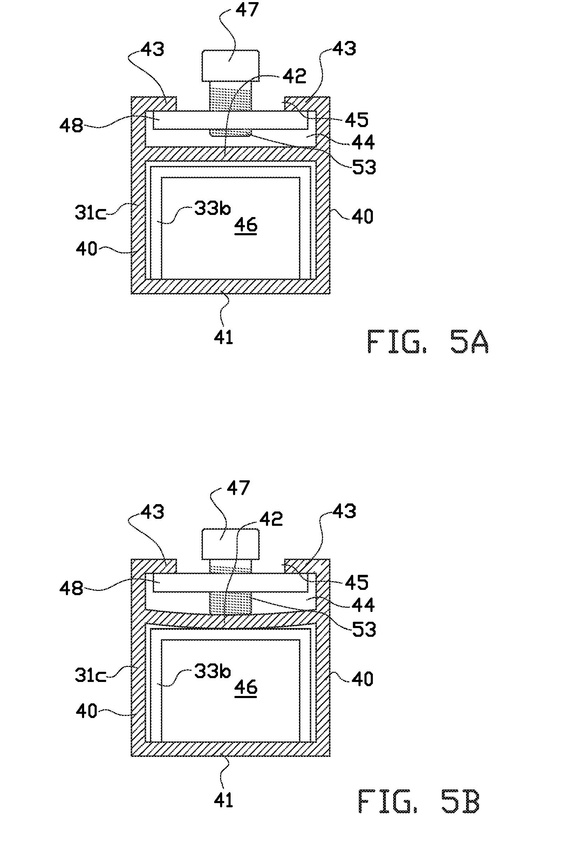

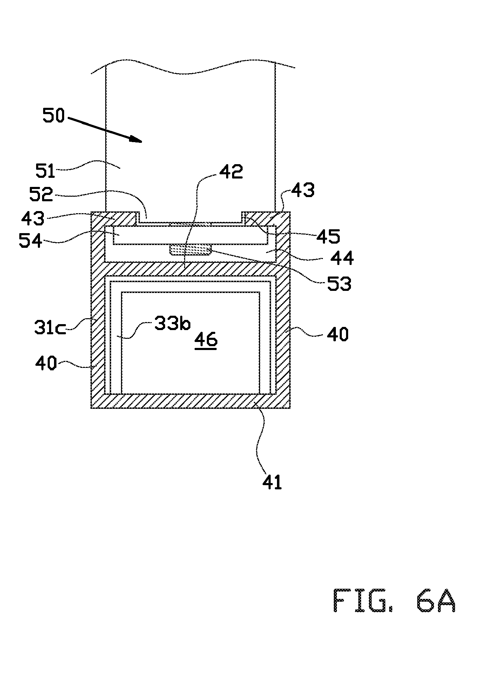

Two supporting rails 31b,c and one coupling profile 33b is shown in more detail in figures 3-6A. As best shown in cross section according to figure 6A, the supporting rails 31a-c each comprise a flat bottom wall 41, two flat side walls 40 perpendicularly extending from the longitudinal sides of the bottom wall 41, and a flat intermediate wall 42 that is parallel to the bottom wall 41. The bottom wall 42, the side walls 40 and the intermediate wall 42 define a sliding chamber 46 for snug and sliding confinement of at least the outer ends of the coupling profiles 33a,b. For clarity of the figures the confinement is shown less snugly. The supporting rails 31a-c further comprise two flat end walls 43 at the upper edge of the side walls 40, which end walls 43 are directed towards each other in order to define an elongated access opening 45 that provides access to a broader clamping chamber 44. The straight coupling profiles 33a,b have a rectangular U-shaped cross section, wherein the opening of the U inside the sliding chamber 46 is directed downwards.

Mutual sliding movement of the supporting rails 31a-c and the coupling profiles 33a,b is locked by means of a rectangular metal plate 48 that is provided with a screw hole for a locking bolt 47. The metal plate 48 with the locking bolt 47 form a part of the supporting rails 31a-c, and is slid into the clamping chamber 44 from one end side of the supporting rails 31a-c, and subsequently the bolt 47 is tightened, whereby its end pushes against the intermediate wall 42. The intermediate wall 42 locally deforms downwards in an elastic or plastic manner, and firmly engages the upper side of the coupling profile 33a,c to lock it inside the sliding chamber 46. Locking can be performed on site after fine adjustment of the mutual positions of the supporting rails 31a-c.

The uppermost supporting rail 31a and the lowermost supporting rail 31c that are provided at the ends of each coupling assembly 30, are each provided with an aluminium end clamp 50. The supporting rail 31b in the centre, which is longer than the end supporting rails 31a, c, is provided with an aluminium middle clamp 60. The middle clamp 60 is positioned approximately in the middle of the centre supporting rail 31b. Both clamps 50, 60 engage the longest outer edges of the solar panels 11a-d. As shown in more detail in figure 6A, the end clamps 50 comprise a base 51 with a smaller bottom part 52 that is snugly confined within the elongated opening 45 of the supporting rail 31a,c, whereby the end clamps 50 remain the same orientation with respect to the supporting rail 31a,c. On the opposite side a hook lip 55 is provided for engagement of the outermost edges 21 of the solar panels 11a-d. As shown in figure 3, a clamping screw 53 extends through a bore within the base 51, which screw 53 is partly screwed into a rectangular clamp plate 54 that is confined within the clamping chamber 44. After positioning of the end clamps 50 in direction A along the supporting rails 31a,c as shown in figure 3, the position of the end clamps 50 can be fixed by tightening the clamping screw 53. In the same manner the middle clamp 60 comprises a base 61 and a clamping screw 63 for fixation of the clamp 60, wherein two hook lips 65a,b have been provided facing away from each other for engagement of the adjacent edges 22 of two solar panels 11a-d.

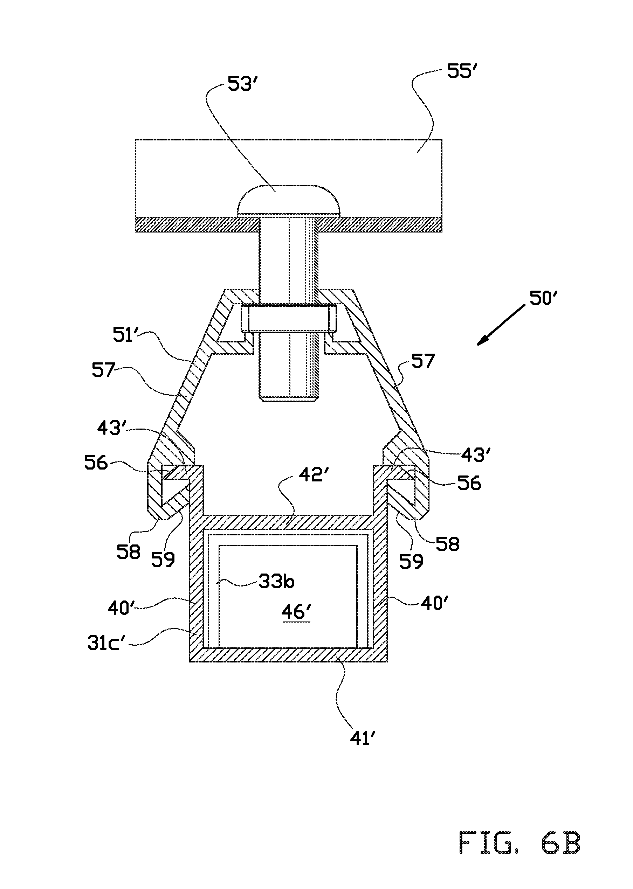

Figure 6B shows a cross section of an alternative aluminium elongated supporting rail 31c' and an alternative aluminium clamp 50' for the coupling assemblies 30. As in the above described embodiment, the supporting rail 31c' comprises a flat bottom wall 41', two flat side portions 40' perpendicularly extending from the longitudinal sides of the bottom wall 41', and a flat intermediate wall 42' that is parallel to the bottom wall 41'. The bottom wall 41', the side walls 40' and the intermediate wall 42' define the sliding chamber 46' for the coupling profiles 33a,b. The alternative supporting rail 31c' further comprises two flat end walls 43' at the upper edge of the side walls 40', which end walls 43' extend outwards and are at the end provided with a hook edge 56 that slopes downwards.

The alternative clamp 50' as shown in figure 6B has a base 51' with two outwardly spreading legs 57 having clamping protrusions 58 at the outer ends that are directed to each other. At the free ends the clamping protrusions 58 are provided with a hook edge 59 that cooperates with the hook edge 56 of the supporting rail 31c' in order to click or snap the clamp 50' from above into engagement with the supporting rail 31c' as shown in figure 6B. The clamp 50 is further provided with a clamping screw 53' that connects a hook lip 55' with the base 51', wherein dependent on the shape of the hook lip 55' the clamp 50' is suitable for use as end clamp or middle clamp.

Again referring to figures 3-5, each supporting rail 31a-c is connected to an elongated aluminium anchor 32a-c that is mounted onto the plate cover deck 12. The anchors 32a-c are mounted to the supporting rails 31a-c in a manner known per se, such as by means of a metal coupling piece which is not shown, having an L profile with the two flanks mounted against the side of the supporting rails 31a-c and against the upper side of the anchors 32a-c.

The anchors 32a-c are each formed as one single piece, and comprise four bridge sections 34a-d having identical inner mounting profiles 35. The mounting profiles 35 mate with the upper outer shape of the mounting ribs 15 of the cover plates 13a-c, wherein the distance between the mounting profiles 35 of the outermost bridge sections 34a,d is such that they together fit over two adjacent mounting ribs 15. The outermost bridge sections 34a,d have each been provided with two bores 38 for mounting the anchors 32a-c on the battens 3 through the upper part of the mounting ribs 15 by means of screws.

In this embodiment the end supporting rails 31a,c each have a length P of 37,5 cm, and the centre supporting rail 31b has a length M of 60 cm. The coupling profiles 33a,b have a length N of 80 cm. In a telescopically fully retracted position, the end surfaces 49 of the supporting rails 31a-c that face each other are in abutment. In the telescopically fully extended position, it is sufficient when the coupling profiles 33a,b extend about 10 cm into the supporting rails 31a-c to obtain sufficient alignment of the supporting rails 31a-c and sufficient support of the solar panels 11a-d. In both retracted and extended position, counterwise rotation of the supporting rails 31a-c along their longitudinal axis is locked.

The solar panels 11a-d are commercially available with a solar panel height H in the longitudinal direction of the coupling assemblies 30 that typically varies between about 80-120 cm, wherein the solar panel length L typically varies between about 120-210 cm respectively. Over the whole range of said solar panel heights H it is possible to position the edges 21, 22 of the solar panels 11a-d in above the supporting rails 31a-c. With a solar panel height H of typically 80 cm the abuttable end surfaces 49 of the supporting rails 31a-c have to be positioned on a distance Q of about 30 cm away from each other. With a typical solar panel height H of 120 cm the abuttable end surfaces 49 of the supporting rails 31a-c have to be positioned on a distance Q of the maximum of 60 cm away from each other, whereby there is still sufficient overlength at the end supporting rails 31a,c to project from the edges 21 to mount an end clamp 50.

The maximum bridged distance Q is more than 1/10 of the length P of the shortest supporting rail 31a,c. More particularly, the maximum distance Q is more than 1/4 of the length P of the shortest supporting rail 31a,c. More particularly, the maximum distance Q is more than 1/3 of the length P of the shortest supporting rail 31a,c. More particularly, this distance is substantially equal to the length P of the shortest supporting rail 31a,c. Seen from above, the bridging portion of the coupling profiles 33a,b that extends between the end surfaces 49 of the supporting rails 31a-c is situated under a solar panel 11a-d, that is between the edges 21, 22 of the solar panels 11a-d.

In the embodiment as shown in figures 1 and 2 the supporting rails 31b in the middle of the coupling assemblies 30 are positioned under the adjacent edges 22 of the solar panels 11a-d, wherein the upper and the lower supporting rails 31a,c extend just enough from the upper and lower edge of the solar panels 11a-d to enable the end clamps 50 to clamp the respective edges 21.

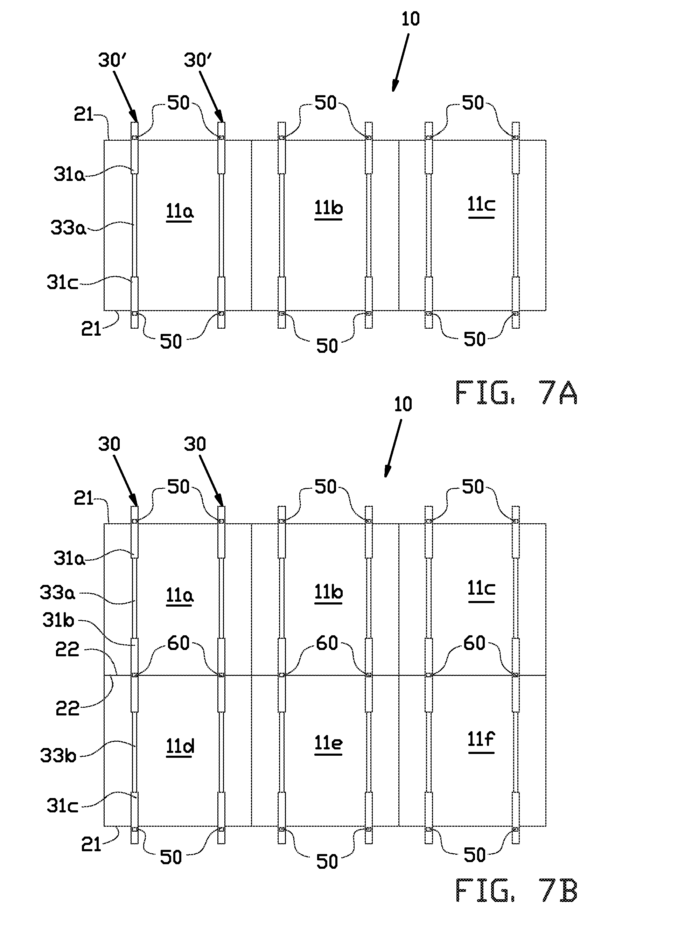

Figures 7A-D show some exemplary configurations of the solar panel holder 10 with the solar panels 11 according to the invention, in order to explain the groups of parts to be supplied to the construction site of the solar panel holder 10.

Figure 7A shows a first configuration of one row with three adjacent solar panels 11a-c in landscape orientation, mounted with six identical coupling assemblies 30'. Per vertical column of solar panels 11a-c the coupling assemblies 30' comprise two end sets of parts, each including two end supporting rails 31a,c, two anchors 32a,c, two end clamps 50 and two coupling profiles 33a.

Figure 7B shows a second configuration of two adjacent rows with three adjacent solar panels 11a-f in landscape orientation, mounted with six identical coupling assemblies 30 as above described in detail. Per vertical column of solar panels 11a-f the coupling assemblies 30 comprise two of said end sets of parts, each including two end supporting rails 31a,c, two anchors 32a,c, two end clamps 50 and two coupling profile 33a. In addition, per vertical column of solar panels 11a-f the coupling assemblies 30 comprise one centre set of parts, including two centre supporting rails 31b, two anchors 32b, two middle clamps 60 and two coupling profiles 33b.

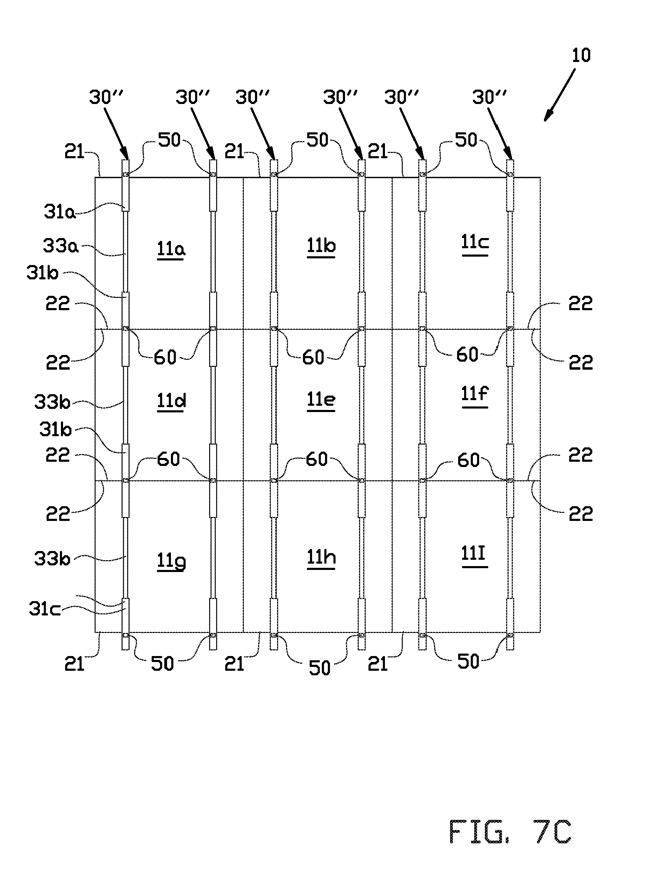

Figure 7C shows a third configuration of three adjacent rows with three adjacent solar panels 11a-i in landscape orientation, mounted with six identical coupling assemblies 30". Per vertical column of solar panels 11a-i the coupling assemblies 30" comprise two of said first set of parts including two end supporting rails 31a,c, two anchors 32a,c, two end clamps 50 and two coupling profiles 33a, and two of said second sets of parts including two centre supporting rails 31b, two anchors 32b, two middle clamps 60 and two coupling profiles 33b.

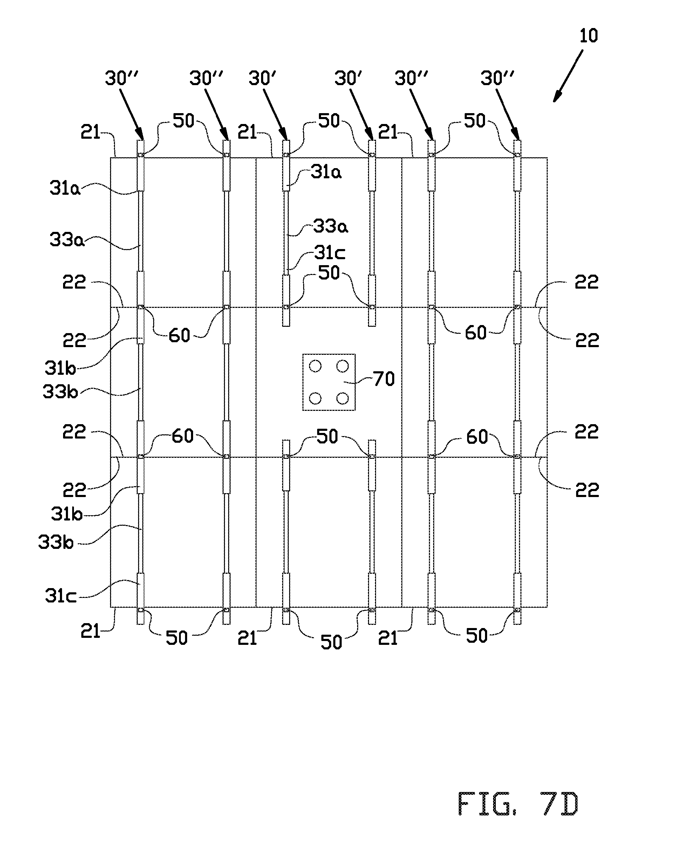

Figure 7D shows a fourth configuration similar to the third configuration, but leaving out the middle solar panel 11e as an obstacle such as a vertically extending air duct or chimney 70 projects from the roof boarding 2. The solar panels 11a-i in the full vertical side columns are mounted with four identical coupling assemblies 30" as used in the third configuration, comprising per column two of said end set of parts, each including two end supporting rails 31a,c, two anchors 32a,c, two end clamps 50, and two coupling profiles 33a, and two of said centre set of parts, each including two centre supporting rails 31b, two anchors 32b, two middle clamps 60 and two coupling profiles 33b. The solar panels 11a-i in the interrupted vertical column are mounted with four identical coupling assemblies 30' as used in the first configuration, comprising per column section two of said end set of parts, each including two end supporting rails 31a,c, two anchors 32a,c, two end clamps 50 and two coupling profiles 33a.

As can be understood, for any configuration the number of end sets of parts is equal to the number of coupling assemblies 30, 30', 30" per solar panel 11, multiplied by the number of free edges 21 of the solar panels 11 that extend perpendicular to the elongated coupling assemblies 30, 30', 30". In addition, the number of centre sets of parts is equal to the number of coupling assemblies 30, 30', 30" per solar panel 11, multiplied by the number of groups adjacent edges 22 of the solar panels 11 that extend perpendicular to the elongated coupling assemblies 30, 30', 30". For a proper supply of the parts of the coupling assemblies 30, 30', 30" to the roof 1, the end sets and the centre sets of parts are individually packed or stored, such as in a blister, wrapper or box, whereby after mentally drafting the configuration of the solar panel holder 10 with the solar panels 11 the right amount of parts is supplied for assembly of the coupling assemblies 30, 30', 30" on site, without redundant parts.

When necessary in the given circumstances, the second sets of parts can be provided with two extra anchors 32, whereby basically each facing edge 22 is supported by its own two anchors 32. This enables sufficient support when the solar panels have a large height H and are therefore subjected to relatively high forces exerted by wind blowing over the roof 1.

It is to be understood that the above description is included to illustrate the operation of the preferred embodiments and is not meant to limit the scope of the invention. From the above discussion, many variations will be apparent to one skilled in the art that would yet be encompassed by the spirit an scope of the present invention.

## Claims

1. Sloped roof provided with a solar panel holder that supports at least one solar panel, wherein the solar panel holder comprises a plate cover deck with sloping water gutter channels and multiple parallel extending elongated coupling assemblies mounted on the plate cover deck, wherein the coupling assemblies comprise a first and a subsequent second elongated supporting rail with a mounting clamp, which supporting rails are aligned with each other and which support and clamp opposite circumferential edges of the solar panel, and a slide-out coupling between the first and the second supporting rail, wherein the slide-out coupling couples the first and second elongated supporting rail fully spaced apart from each other while bridging the distance between the first and second supporting rail.

2. Sloped roof according to claim 1, wherein the slide-out coupling couples the first and second elongated supporting rail spaced apart at a mutual distance of at least 1/10 of the length of one of said supporting rails, preferably 1/4 of the length of one of said supporting rails, preferably 1/3 of the length of one of said supporting rails, preferably equal the length of one of said supporting rails or longer, while remaining the mutual alignment of the supporting rails.

3. Sloped roof according to any one of the preceding claims, wherein the slide-out coupling enables a continuously variable adjustment of the mutual distance of the first and second supporting rail prior to the mounting of the coupling assembly on the plate cover deck.

4. Sloped roof according to any one of the preceding claims, wherein the slide-out coupling comprises a first locking device for locking the mutual position of the first and second supporting rail.

5. Sloped roof according to claim 4, wherein the first locking device locally deforms the first or second supporting rail to lock the telescopic coupling.

6. Sloped roof according to any one of the preceding claims, wherein the slide-out coupling substantially locks counter rotation of the first and second supporting rail around the longitudinal axis of the coupling assembly.

7. Sloped roof according to any one of the preceding claims, wherein the slide-out coupling comprises an elongated coupling member that is slidably supported by at least one of the supporting rails, wherein the elongated coupling member is preferably telescopically confined inside at least one of the supporting rails.

8. Sloped roof according to claim 7, wherein said supporting rails comprise an elongated prismatic profile, preferably made of metal, preferably aluminum, that is at least partially hollow to confine a part of the coupling member.

9. Sloped roof according to claim 7 or 8, wherein the coupling member comprise an elongated prismatic profile, preferably made of metal, preferably aluminum.

10. Sloped roof according to claim 8 or 9, wherein the cross section of said profile is substantially equal over the entire length of the profile.

11. Sloped roof according to any one of the preceding claims, wherein the elongated coupling assemblies comprise a third elongated supporting rail with a clamp that is aligned with the second elongated supporting rail, and said slide-out coupling between the second and the third coupling rail, wherein the second supporting rail clamps and supports the adjacent circumferential edges of two solar panels.

12. Sloped roof according to any one of the preceding claims, wherein the coupling assemblies comprise an anchor on at least one of said supporting rails for mounting that supporting rail on the cover plate deck.

13. Sloped roof according to any one of the preceding claims, wherein the mounting clamps are slidably supported by the supporting rails for adjustment of the position of the clamps along the supporting rail, wherein the mounting clamps preferably comprise second locking means for locking the mounting clamps with respect to the supporting rail.

14. Method for providing a sloped roof with a solar panel holder that supports at least one row, preferably at least two rows with each at least one solar panel, wherein the solar panel holder comprises a plate cover deck with sloping water gutter channels and multiple parallel extending elongated coupling assemblies mounted on the plate cover deck, wherein the coupling assemblies comprise a first and a subsequent second elongated supporting rail with a mounting clamp, which supporting rails are aligned with each other and which support and clamp opposite circumferential edges of the solar panel, and a slide-out coupling between the first and the second supporting rail, and, in case of at least two rows, a third elongated supporting rail with a mounting clamp that is aligned with the first and second elongated supporting rail, and a slide-out coupling between the second and the third supporting rail, wherein the third coupling rail supports the adjacent circumferential edges of two solar panels out of the two rows, wherein the method comprises supplying the coupling assemblies to the roof in distinct packages, wherein a package comprises an end set of parts including the first and second supporting rail and the slide-out coupling, or wherein a package comprises a centre set of parts including the third elongated supporting rail and at least one piece of the slide-out coupling, wherein the supplied number of end sets is equal to or a multiple of the number of free circumferential edges extending perpendicular to the elongated coupling assemblies and the number of centre sets is equal to or a multiple of the number of groups adjacent circumferential edges extending perpendicular to the elongated coupling assemblies.

15. Package comprising an end set and/or a centre set for providing a coupling assembly for supporting at least one solar panel on a sloped roof,
wherein the end set comprises a first and a subsequent second elongated supporting rail, and a slide-out coupling between the first and the second supporting rail, and
wherein the centre set comprises a third elongated supporting rail and a further slide-out coupling,
wherein, at least in use, the second or third elongated supporting rail and the first elongated supporting rail are fully spaced apart from each other and are coupled to each other by the slide-out coupling which bridges the distance between the coupled supporting rails.
